# EUROPÄISCHE PATENTSCHRIFT

(11) **EP 1 248 513 B1**
(45) Veröffentlichungstag und Bekanntmachung des Hinweises auf die Patenterteilung: **07.01.2004**
(21) Anmeldenummer: 01900019.9
(22) Anmeldetag: 09.01.2001
(51) Int. Cl.: A01F 15/07, A01F 15/00, B30B 9/30

(54) **VORRICHTUNG ZUM VERARBEITEN LANDWIRTSCHAFTLICHER PRODUKTE, INSBESONDERE VON FUTTERMAIS**
DEVICE FOR PROCESSING AGRICULTURAL PRODUCTS IN PARTICULAR FODDER MAIZE
DISPOSITIF POUR TRAITER DES PRODUITS AGRICOLES, NOTAMMENT DU MAIS FOURRAGER

(30) Priorität: 19.01.2000 CH 972000
(43) Veröffentlichungstag der Anmeldung: 16.10.2002
(73) Patentinhaber: Lisibach, Urs, 6020 Emmenbrücke (CH)
(72) Erfinder: Lisibach, Urs, 6020 Emmenbrücke (CH)
(74) Vertreter: Volpert, Marcus, Dr.
(86) Internationale Anmeldenummer: PCT/CH2001/000013
(87) Internationale Veröffentlichungsnummer: WO 2001/052629

(56) Entgegenhaltungen:
- WO-A-92/20210
- WO-A-94/27423
- WO-A-99/04613
- DE-A- 4 037 533
- DE-U- 29 802 541
- FR-A- 2 687 280
- US-A- 5 531 061
- DATABASE WPI Section PQ, Week 198437 Derwent Publications Ltd., London, GB; Class P12, AN 1984-229624 XP002164585 & SU 1 066 497 A (KAZA AGRIC MECH ELE), 15. Januar 1984 (1984-01-15)

## Beschreibung

Mais ist heutzutage als Getreidepflanze weit verbreitet und liefert als sogenannter Futtermais einen wichtigen Grundstoff für die Tiermast. Unter anderem werden vollständige Maispflanzen im unreifen Zustand als Grünfutter verwendet. Maissilage dagegen wird aus ganzen Maispflanzen in der Milchreife gewonnen und ist weltweit das beherrschende Grundfutter für die Rindermast. Zudem wird die Maiskolbenschrotsilage als Basis für die Schweinemast eingesetzt. Da der Anbau des Futtermaises häufig durch spezialisierte landwirtschaftliche Betriebe erfolgt, sind die Produktion und die Weiterverwendung durch Betriebe zur Tiermast nicht selten räumlich getrennt, so dass der Futtermais transportiert und gelagert werden muss. Im Augenblick werden zur Konservierung des Futtermaises zwei Techniken eingesetzt.

Bei der Lagerung des Futtermaises in Hochsilos wird der gehäckselte und zerkleinerte Mais unter Beigabe von Zusatzstoffen in Türme gefüllt, kompaktiert und bis auf eine schmale Schicht an der Oberfläche von der Umgebung abgeschlossen, wodurch eine Gärung verhindert wird. Problematisch bei dieser Methode ist die Menge, die von den verarbeitenden Betrieben abgenommen werden kann. Um eine Gärung noch vor der Benutzung im Betrieb zu vermeiden, werden dem Futtersilo nur Ein- oder Zweitagesrationen entnommen, da ein hermetischer Abschluss von der Umgebung nicht mehr gewährleistet werden kann.

Die zweite verwendete Methode ist die Kompaktierung des gehäckselten Futtermaises in Sackpressen durch das Niederdrücken des Futtermaises mit Hilfe einer Pressplatte innerhalb eines nach oben offenen Sackes, welcher zur Stabilisierung in einem Korb hängt. Nachteilig an dieser Methode ist, dass sich der Futtermais erneut teilweise ausdehnen kann, wenn die Pressplatte nach der Verdichtung wieder aus dem Sack herausbewegt wird. Zudem ist der mögliche Verdichtungsgrad gering, da der Futtermais nur von einer Seite zusammengedrückt wird. Als weiterer Nachteil ist zu nennen, dass die Form des kompaktierten Futtermaises aufgrund der Geometrie des verwendeten Sackmaterials nicht optimal ist, so dass die Säcke nicht platzsparend gelagert werden können.

Aus der DE-A1-38 00 479 sowie DE-A1-38 18 578 ist eine Vorrichtung zum Ernten von Feldfutter bekannt, bei welcher das Erntegut vom Boden aufgenommen und in einem Presskanal schichtweise verdichtet wird. Nach erfolgter Bindung wird der Ballen zur offenen Seite eines Stapelkanals geschoben und im weiteren Verlauf auf den Boden abgeworfen.

Aus der DE-A1-34 07 353 ist ein Fahrzeug zur Futterbergung mit Wechseleinrichtungen bekannt. Dieses Fahrzeug hat eine Aufnahme-, Förder-, Schneid- und Pressvorrichtung sowie die dazugehörige Wechseleinrichtung. Während des Pressens wird der Futterblock mit einer Netz- oder Folienbahn umreift.

Aus der EP-B1-0 543 792 ist eine Verpackungsmaschine zum Verpacken von Strohballen bekannt, bei der ein quaderförmiger Ballen mittels zwei Rolleneinheiten über 360° um die im wesentlichen horizontale Achse drehbar ist, um Kunststoffolien in Schichten oder überlappend um den Strohfutterballen zu legen.

Eine Vorrichtung gemäss dem Oberbegriff des Patentanspruchs 1 ist aus der DE-A1-36 33 219 bekannt.

Bei dieser Vorrichtung wird das landwirtschaftliche Produkt, auch Aufbereitungsgut genannt, nach dem Pressen allseitig mit einer geschlossenen Umhüllung versehen. Für die Umhüllung wird ein Kunststoff-Folienmaterial, nämlich ein Schrumpffolienmaterial, verwendet. Mittels eines sogenannten Haubenüberziehers wird der Pressblock in einer Richtung mit einer ersten Schrumpffolienhaube überzogen. Nach dem Anschrumpfen dieser Haube wird das Pressgut mittels einer Wendevorrichtung um 180° gewendet und eine zweite Schrumpffolienhaube über das freie, nunmehr oben liegende, andere Ende des Gutes gezogen und anschliessend mit Wärme derart beaufschlagt, dass die zweite Schrumpffolienhaube eng an das Pressgut anschrumpft und durch Verschweissen des Überlappungsabschnittes der beiden Schrumpffolienhauben eine insgesamt völlig dichte Umhüllung des Pressgutes entsteht.

Der Erfindung liegt die Aufgabe zugrunde, eine Vorrichtung der eingangs erwähnten Art zu schaffen, bei der das Pressgut leicht umhüllbar und selbst im Falle einer Verletzung der Verpackung soweit geschützt bleibt, dass keine Luft hinzutreten und eine Gärung weitgehend verhindert ist.

Die Aufgabe wird mit Hilfe der erfindungsgemässen Ausbildungsmerkmale des Patentanspruchs 1 gelöst. Vorteilhafte Weiterbildungen der Erfindung sind Gegenstand der abhängigen Ansprüche.

Die vorgeschlagene, insbesondere zum Verarbeiten von Futtermais geeignete Vorrichtung besteht aus zwei Einheiten. In der Kompaktiereinheit, auch Pressform genannt, wird der gehäckselte Futtermais von oben her in eine nach unten zulaufende Form eingeführt, anschliessend von zwei senkrecht gegeneinander beweglichen Presszylindern gegen die Wände der Form gedrückt und dabei verdichtet. Im Anschluss an die Verdichtung wird das Pressgut durch einen dritten Zylinder aus der Form geschoben und in der Verpackungseinheit von einer Folienrolle in zwei Richtungen mit einem strapazierfähigen Kunststoffmantel umhüllt.

Die vorgeschlagene Vorrichtung und die einführend beschriebene Funktionsweise sind im Folgenden anhand erläuternder Zeichnungen dargestellt. Es zeigen:
- Fig. 1: einen Querschnitt durch die Pressform in Vorderansicht (Fig. 1a) und einen senkrecht dazu stehenden, teilweisen Vertikalschnitt des Transportweges in Seitenansicht (Fig. 1b),
- Fig. 2: eine teilweise geschnittene Vorderansicht der Folienrolle mit einer schematischen Darstellung des Abrollens der Kunststoffhülle in der ersten Wickelrichtung (Fig. 2a) und eine schematische, teilweise geschnittene Seitenansicht der entsprechenden mechanischen Elemente (Fig. 2b),
- Fig. 3: eine teilweise geschnittene Seitenansicht (Fig. 3a) und eine teilweise geschnittene Aufsicht (Fig. 3b) des Abrollens der Kunststoffhülle in der zweiten Wickelrichtung,
- Fig. 4: eine schematische Darstellung der Orientierung der Kunststoffhülle nach der ersten Wicklung (Fig. 4a) und der zweiten Wicklung (Fig. 4b).

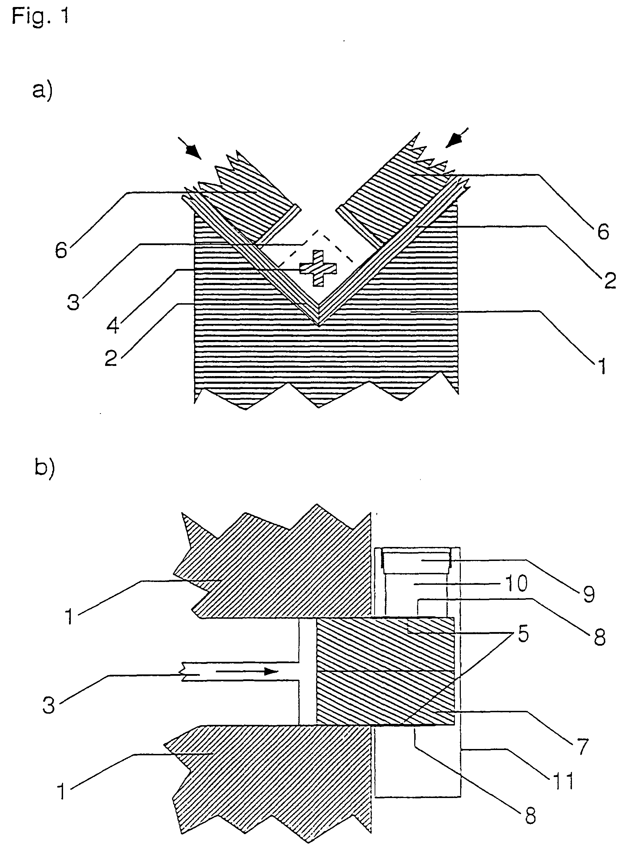

In der ersten Abbildung ist in einer schematischen Darstellung ein Querschnitt durch die Pressform 1 wiedergegeben (Fig. 1a). Die Pressform hat mehrere, im gezeigten Ausführungsbeispiel mindestens zwei Seitenwände. Die zwei Seitenwände 2 der Pressform 1 bilden einen Trog, der seitlich durch einen Ausstosszylinder 3 mit aufgesetztem Kreuzelement 4 und auf der anderen Seite durch eine Begrenzungstür 5 abgeschlossen wird. In diesen Trog wird das landwirtschaftliche Produkt, insbesondere Futtermais, eingefüllt, anschliessend durch mehrere, vorzugsweise zwei, senkrecht aufeinander stehende Presszylinder 6 gegen die Seitenwände 2 der Pressform gedrückt und kompaktiert. Insofern wird das landwirtschatliche Produkt von mehreren Seiten, bei der gezeigten Ausführungsform von zwei Seiten verdichtet. Ist die gewünschte Verdichtung erreicht, verharren die Presszylinder 6 in ihrer Endposition und bilden damit zwei zusätzliche Seitenwände. Um das Pressgut 7 aus der Pressform 1 herauszubewegen, wird die Begrenzungstür 5 nach aussen geöffnet, welche aus vier ineinander verschachtelten Seitenelementen 8 besteht, denen im geöffneten Zustand die Aufgabe zukommt, die Form des Pressgutes 7 beim Transport soweit wie möglich zu erhalten und dadurch ein Zerfallen zu verhindern (Fig. 1b). Der Ausstosszylinder 3 schiebt das Pressgut 7 seitlich aus der Pressform 1, wobei das Pressgut 7 durch die Seitenelemente 8 stabilisiert und gleichzeitig durch die erste Folienrolle 9 mit einer Umhüllung, insbesondere einer Kunststoffhülle, 10 ummantelt wird.

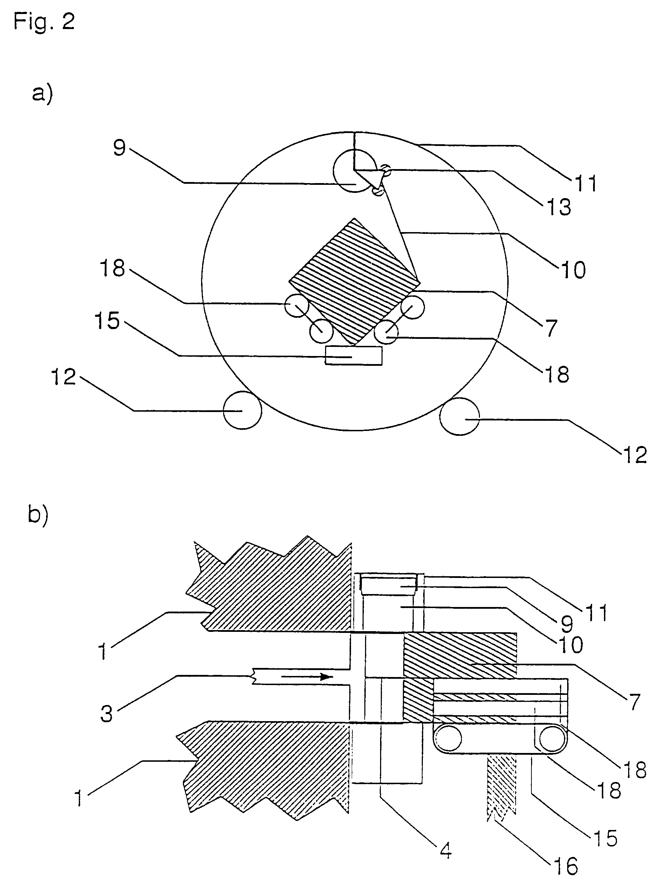

In der zweiten Abbildung ist eine Vorderansicht der ersten Folienrolle 9 zusammen mit einer schematischen Darstellung des Abrollens der Kunststoffhülle 10 in der ersten Richtung dargestellt (Fig. 2a). Die Folienrolle 9 ist stationär an einem Ringelement 11 befestigt, welches über zwei Rollelemente 12 in eine Rotationsbewegung um das Pressgut 7 versetzt wird und die Folienrolle 9 um das Pressgut 7 herumführt. Dabei wird die Kunststoffhülle 10 von der Folienrolle 9 abgerollt und auf das Pressgut 7 aufgezogen, wobei durch die Bremsvorrichtungen 13 für eine stete Zugspannung und ein optimal es Auflegen der Kunststoffhülle 10 auf das Pressgut gesorgt wird, ohne dass sich das Pressgut 7 währenddessen wieder ausdehnt oder zerfällt. Das Pressgut 7 wird durch den Ausstosszylinder 3 langsam aus der Pressform 1 geschoben und umfangsseitig vollständig mit der Kunststoffhülle 10 eingepackt. Erreicht das Pressgut 7 einen bestimmten Abstand von der Pressform 1, wird es an der unteren Seite von einem drehbar gelagerten Wickeltisch mit beweglichem Gummiband 15 abgestützt und mitgeführt (Fig. 2b). Nachdem das Pressgut 7 eingehüllt worden ist, wird es durch das Kreuzelement 4 vom Ausstosszylinder 3 abgetrennt.

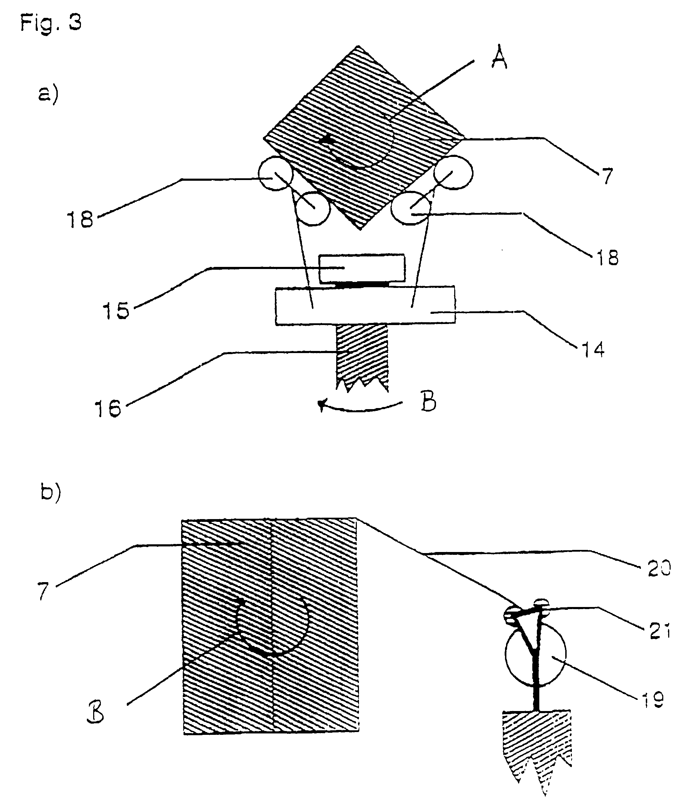

Die Fig. 3 zeigt das Abrollen der Kunststoffhülle in der zweiten Richtung. An den Wickeltisch 14 sind eine Drehstange 16 sowie zwei Seitenarme mit Rollelementen 18 angesetzt (Fig. 3a). Im Anschluss an die Abtrennung des Pressgutes 7 vom Ausstosszylinder 3 wird dieses mit Hilfe der Rollelemente 18 so angehoben, dass kein Kontakt mehr mit dem Gummiband 15 besteht. Der Wickeltisch 14 rotiert horizontal um die Drehstange 16, während von einer zweiten Folienrolle 19 eine Umhüllung, insbesondere eine Kunststoffhülle, 20 abgerollt und mit Hilfe zusätzlicher Bremsvorrichtungen 21 fest auf das Pressgut 7 aufgezogen wird. Zusätzlich zur Rotation um die vertikale Drehstange 16 wird entlang dem Pfeil A in Fig. 3a eine Drehbewegung um eine horizontale Drehachse durch die zumindest teilweise angetriebenen Rollelemente 18 ausgeübt, so dass die Wicklung der zweiten Kunststoffhülle 20 als eine Überlagerung der Rotation (siehe Pfeil B in Fig. 3b) um die vertikale Achse 16 und der Drehung (siehe Pfeil A in Fig. 3a) um eine horizontale Achse angesehen werden kann.

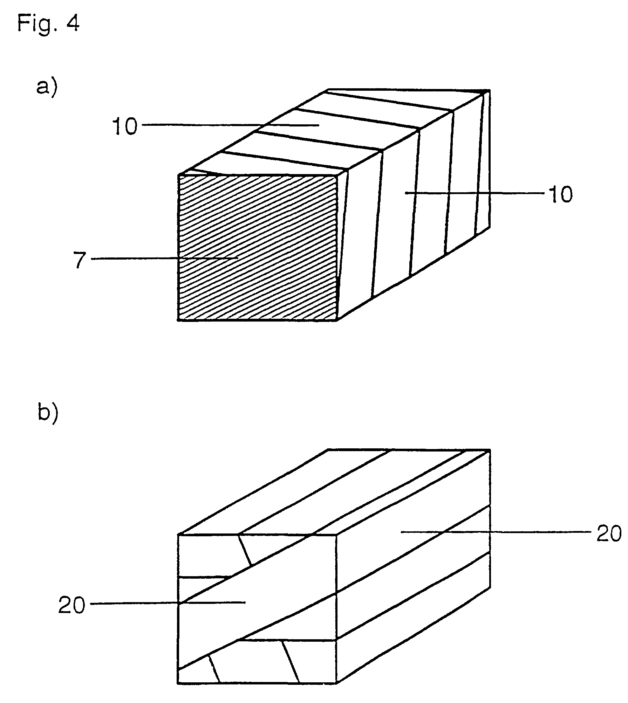

In der vierten Abbildung ist schematisch die Wicklung des Pressgutes 7 dargestellt. Durch das gleichzeitige Herausbewegen des Pressgutes 7 aus der Pressform 1 und das Abrollen der Kunststoffhülle 10 von der Folienrolle 9 ergibt sich bei der ersten Wicklung eine spiralartige Querwicklung (Fig. 4a). Bei der zweiten, senkrecht auf der Querwicklung liegenden Wicklung handelt es sich um eine Längswicklung (Fig. 4b). Zusammenfassend lässt sich die Hülle als eine Kreuzwicklung bezeichnen, die auf der äusseren Mantelfläche in zwei Schritten in zwei verschiedenen Richtungen durchgeführt wird. Das Ergebnis ist eine sehr stabile Ummantelung. Wenn nun das Pressgut portionsweise in Scheibenform quer zu den äusseren Wickelungen abgeschnitten wird, zerfällt das übrige Pressgut nicht, weil durch das Aufschneiden quer zu den äusseren Wickelungen auch nur diese äusseren Wickelungen sich lösen können, während die restlichen inneren Wickelungen, welche beinahe parallel zur Schneiderichtung verlaufen und leicht aufeinander kleben, intakt bleiben.

Die vorgeschlagene Vorrichtung weist gegenüber den verbreiteten Methoden zur Kompaktierung und Lagerung des Futtermaises wesentliche Vorteile auf. Die Konstruktion der vorgeschlagenen Pressform sowie der Verpackungseinheit ist deutlich stabiler als die üblichen Sackpressen und gewährleistet einen dauerhaften und zuverlässigen Einsatz auch bei grossen Verarbeitungsmengen. Durch die Kompaktierung und Formung zu würfelförmigen Ballen lässt sich das Pressgut zuverlässig stapeln und damit gut transportieren beziehungsweise lagern. Diese optimale Stapelung war mit den durch die Sackpresse geformten Ballen nicht möglich, und zudem wiesen sie eine deutlich geringere Verdichtung des Futtermaises auf. Durch die Kreuzwicklung der Kunststoffhülle ist ein teilweises Öffnen und Entnehmen des Pressgutes möglich, während der restliche Futtermais weiterhin geschützt bleibt, so dass eine Gärung des Pressgutes vermieden werden kann. Dies ist besonders vorteilhaft für die Abnehmer, die im Vergleich zum im Futtersilo gelagerten Futtermais deutlich grössere Mengen abnehmen und je nach Bedarf aufbrauchen können, ohne die Gärung des Futtermaises fürchten zu müssen. Die Produktion von Futtermais wird häufig von spezialisierten Landwirten durchgeführt, denen durch die besonders kompakte Verdichtung in würfelförmiges Pressgut eine im Vergleich zur Silohaltung deutlich platz- und kostensparendere Lagerhaltung möglich wird. Die durch die vorgeschlagene Vorrichtung verbesserte Art der Lagerung des Futtermaises spricht zudem auch Landwirte an, die aufgrund der früher eingeschränkten Verwendung des Futtermaises ausserhalb des Silos auf die Verwendung gelagerten Futtermaises verzichtet hatten, und erweitert somit die Basis potentieller Abnehmer.

## Patentansprüche

1. Vorrichtung zum Verarbeiten landwirtschaftlicher Produkte, insbesondere von Futtermais, mit einer Pressform (1) zum Verdichten bzw. Kompaktieren des Produktes zu einem Pressgut (7) und mit einer Verpackungseinheit (9 bis 13; 14 bis 21) zum Versehen des Pressgutes (7) mit einer allseitigen Umhüllung (10), welche Verpackungseinheit (9 bis 13; 14 bis 21) derart ausgebildet und angeordnet ist, dass diese das Pressgut (7) in zwei Richtungen mit einer Umhüllung (10, 20) umwickelt, **dadurch gekennzeichnet, dass** die Pressform (1) mehrere, einen Trog bildende Seitenwände (2) und mehrere senkrecht aufeinander stehende und gegen die Seitenwände (2) der Pressform (1) drückbare Presszylinder (6) hat, wobei der Trog seitlich auf der einen Seite durch einen Ausstosszylinder (3) und auf der anderen Seite durch eine nach aussen zu öffnende Begrenzungstür (5) abschliessbar ist, die mehrere ineinander verschachtelte Seitenwände (8) hat, die in geöffnetem Zustand die Form des Pressgutes (7) bei dessen Transport mittels des Ausstosszylinders (3) zur Verpackungseinheit (9 bis 13; 14 bis 21) so weit wie möglich stabilisieren.

2. Vorrichtung nach Anspruch 1, **dadurch gekennzeichnet, dass** die erste Wicklung eine spiralartige Querwicklung und die zweite Wicklung eine grösstenteils senkrecht auf der Querwicklung liegende Längswicklung ist.

3. Vorrichtung nach Anspruch 1 oder 2, **dadurch gekennzeichnet, dass** die Verpackungseinheit eine erste Folienrolle (9) aufweist, welche stationär an einem Ringelement (11) befestigt ist, das über Rollelemente (12) in eine Rotationsbewegung um das Pressgut (7) versetzbar ist und die erste Folienrolle (9) um das Pressgut (7) herumführt.

4. Vorrichtung nach einem der vorhergehenden Ansprüche, **dadurch gekennzeichnet, dass** die Verpackungseinheit einen Wickeltisch (14), an den eine Drehstange (16) angesetzt ist, und eine zweite Folienrolle (19) aufweist und die Umhüllung (20) bei einer Rotation des Wickeltisches (14) um die Drehstange (16) auf das Pressgut (7) aufziehbar ist.

5. Vorrichtung nach Anspruch 4, **dadurch gekennzeichnet, dass** an den Wickeltisch (14) zwei Seitenarme mit Rollelementen (18) angesetzt sind und dass zusätzlich zur Rotation um die Drehstange (16) durch die zumindest teilweise angetriebenen Rollelemente (18) eine Drehbewegung um eine horizontale Achse ausführbar ist, so dass die Wicklung der zweiten Umhüllung (20) eine Überlagerung aus Rotation um eine vertikale Achse und Drehung um eine horizontale Achse darstellt.

6. Vorrichtung nach einem der vorhergehenden Ansprüche, **dadurch gekennzeichnet, dass** die Umhüllung eine Kunststoffhülle (10, 20) ist.

7. Vorrichtung zumindest nach Anspruch 3 oder 4, **dadurch gekennzeichnet, dass** jede Folienrolle (9, 19) für eine stete Zugspannung und ein optimales Auflegen der Umhüllung (10, 20) auf das Pressgut (7), ohne dass dieses währenddessen sich wieder ausdehnt oder zerfällt, eine Bremsvorrichtung (13, 21) aufweist.

8. Vorrichtung nach einem der vorhergehenden Ansprüche, **dadurch gekennzeichnet, dass** die Pressform (1) zwei Seitenwände (2) und zwei gegen die Seitenwände (2) der Pressform (1) drückbare Presszylinder (6) hat.

9. Vorrichtung zumindest nach Anspruch 4, **dadurch gekennzeichnet, dass** der Wickeltisch (14) ein bewegliches Gummiband (15) hat, das das Pressgut (7), wenn dieses durch den Ausstosszylinder (3) langsam aus der Pressform (1) geschoben, mit der Umhüllung (10) ummantelt ist und einen bestimmten Abstand von der Pressform (1) erreicht hat, an der unteren Seite abstützt und mitführt.

10. Vorrichtung zumindest nach den Ansprüchen 5 und 9, **dadurch gekennzeichnet, dass** das Pressgut (7) im Anschluss an seine Abtrennung vom Ausstosszylinder (3) mittels eines daran vorgesehenen Kreuzelementes (4) mit Hilfe der Rollelemente (18) derartig anhebbar ist, dass kein Konta kt mehr mit dem Gummiband (15) besteht.

## Claims

1. Device for the processing of agricultural products, in particular of maize meal, by means of a press form (1) to compress respectively to compact the product into a pressed product (7) and with a packaging unit (9 to 13; 14 to 21) to fit the pressed product (7) with an all round wrapping (10), whereby the packaging unit (9 to 13; 14 to 21) is formed and ordered in such a way that the pressed product (7) is wrapped by the wrapping in two directions (10, 20), so characterised that the press form (1) has several side walls (2) which form a trough, and several press cylinders vertically on top of each other, which can be pressed against the side walls (2) of the press form (1), whereby the trough is lockable laterally on one side by means of an ejector cylinder (3) and on the other side through a stop door (5), that can be opened from the outside, and [the trough] has several interlocking side walls (8), which, in an open condition, will stabilise, as far as possible, the shape of the pressed product (7) during its transportation by means of the ejector cylinder (3) through to the packaging unit (9 to 13; 14 to 21).

2. Device according to Claim 1 is so characterised, that the first wrapping is a spiral-like crosswise wrapping and the second wrapping is a lengthwise wrapping which to a large extent lies vertically on the crosswise wrapping.

3. Device according to Claim 1 or 2 is so characterised, that the packaging unit shows a first roll of foil (9) which is attached in a stationary manner to a ring element (11), which can be set in motion through the roller element (12) in a rotating movement around the pressed product (7) and leads the first roll of foil (9) around the pressed product (7).

4. Device according to one of the previous claims is so characterised, that the packaging unit is attached to a wrapping table (14) onto which a rotating rod (16) is attached and shows a second roll of foil (19), and the wrapping (20) is able to be applied through the rotation of the wrapping table (14) around the rotating rod (16) onto the pressed product.

5. Claim according to Claim 4 is so characterised, that on the wrapping table (14) two side arms with roller elements (18) are attached and that in addition to the rotation around the rotation rod (16) through the at least partially powered roller elements (18), a rotation around one horizontal axle is feasible, so that the wrapping of the second layer (20) forms a overlay resulting from the rotation around a vertical axle and the turning around a horizontal axle.

6. Device according to one of the previous claims is so characterised, that the wrapping is of a synthetic material (10, 20).

7. Device at least according to claim 3 or 4 is so characterised, that each roll of foil (9, 19) shows a braking mechanism (13, 21) in order to ensure a constant tensile strength and an optimal application of the wrapping (10, 20) onto the pressed product (7) without the pressed product expanding or falling apart in the meantime.

8. Device according to one of the previous claims is so characterised, that the press form (1) has two side walls (2) and two press cylinders which can be pressed against the side walls (2) of the press form (1).

9. Device at least according to claim 4 is so characterised, that the wrapping table (14) has a movable elastic band (15) which leads the pressed product (7), and supports it from underneath, when it is slowly pushed through the ejector cylinder (3) out of the press form (1), and is wrapped with the wrapping (1) and has reached a certain distance from the press form (1).

10. Device at least according to claims 5 and 9 is so characterised, that the pressed product (7), following its separation from the ejector cylinder (3) by means of a designated cruciform element (4) through the help of the roller element (18), can be lifted in such a way so that there is no longer any contact with the elastic band.

## Revendications

1. Installation pour le traitement de produits agricoles, en particulier le maïs pour bétail, avec une forme de pressage (1) pour la compression ou le serrage des produits en une matière comprimée (7) et avec une unité de conditionnement (9 à 13 ; 14 à 21) pour attribuer à la matière comprimée (7) une enveloppe multilatérale (10). Cette unité de conditionnement (9 à 13 ; 14 à 21) est formée et arrangée de façon à emballer la matière comprimée (7) avec une enveloppe (10 ; 20) dans les deux directions. Cette installation se **caractérise par le fait que** la forme de pressage (1) a plusieurs parois latérales (2) formant une auge, et plusieurs cylindres de compression (6) montés l'un sur l'autre verticalement qui peuvent être poussés contre les parois latérales (2) de la forme de pressage (1). L'auge comporte d'un côté un cylindre d'échappement (3) et de l'autre une porte de limitation à ouvrir de l'extérieur et verrouillable (5), comportant plusieurs parois latérales imbriquées les unes dans les autres (8) qui stabilisent, lorsqu'elles sont ouvertes, le plus possible la forme du matériel comprimé (7) lors de son transport par le cylindre d'échappement (3) vers l'unité de conditionnement (9 à 13 ; 14 à 21).

2. Installation selon spécification 1, **caractérisée par le fait que** le premier enroulement consiste en un enroulement transversal en forme de spirale et que le deuxième enroulement est principalement un enroulement longitudinal posé verticalement sur l'enroulement transversal.

3. Installation selon la spécification 1 ou 2, **caractérisée par le fait que** l'unité de conditionnement dispose d'un premier rouleau de feuille (9) fixé de façon permanente à un élément d'anneau (1) et pouvant être déplacé par des éléments rotatifs (12) dans un mouvement rotatif autour du matériel comprimé (7) et qui mène le premier rouleau de feuille (9) autour du matériel comprimé (7).

4. Installation selon l'une des spécifications antérieures, **caractérisée par le fait que** l'unité de conditionnement consiste en une table d'enroulement (14) à laquelle est attachée une barre tournante (16), et un deuxième rouleau de feuille (19), de sorte que l'enveloppe (20) peut être positionnée sur le matériel comprimé (7) en faisant effectuer à la table d'enroulement une rotation (14) autour de la barre tournante (16).

5. Installation selon la spécification 4, **caractérisée par le fait que** la table d'enroulement (14) dispose de deux bras latéraux avec éléments rotatifs (18) et qu'en plus de la rotation autour de la barre tournante (16), par les éléments rotatifs (18) au moins partiellement entraînés, un mouvement rotatif supplémentaire autour d'un axe horizontal peut être effectué, afin que l'enroulement de la deuxième enveloppe (20) représente une superposition par rotation autour d'un axe vertical et torsion autour d'un axe horizontal.

6. Installation selon l'une des spécifications antérieures, **caractérisée par le fait que** l'enveloppe est une enveloppe en matière synthétique (10,20).

7. Installation selon la spécification 3 ou 4, **caractérisée par le fait que** chaque rouleau de feuille (9,19) dispose d'un dispositif de freinage (13, 21) pour une contrainte de tension et un positionnement optimal de l'enveloppe (10,20) sur le matériel comprimé (7), sans que celui-ci ne se relâche ou ne se décompose.

8. Installation selon l'une des spécifications antérieures, **caractérisée par le fait que** la forme de pressage (1) comporte deux parois latérales (2) et deux cylindres de pressage (6) qui peuvent être pressés contre les parois latérales (2) de la forme de pressage (1).

9. Installation au moins selon la spécification 4, **caractérisée par le fait que** la table d'enroulement (14) dispose d'une bande en caoutchouc amovible (15) qui soutient le matériel comprimé (7) sur le côté inférieur et le guide, lorsque celui-ci sort lentement, par le cylindre d'échappement (3), de la forme de pressage (1), est enrobé avec l'enveloppe (10) et a gagné une certaine distance de la forme de pressage (1).

10. Installation au moins selon les spécifications 5 et 9, **caractérisée par le fait qu'**après sa séparation du cylindre d'échappement (3), le matériel comprimé (7) peut être soulevé grâce à un élément en croix (4) prévu à cet effet à l'aide d'un élément rotatif (18), de façon à ce que plus aucun contact n'existe avec la bande en caoutchouc (15).
